# EUROPÄISCHE PATENTSCHRIFT

(11) **EP 2 368 056 B1**
(45) Veröffentlichungstag und Bekanntmachung des Hinweises auf die Patenterteilung: **02.03.2016**
(21) Anmeldenummer: 10798522.8
(22) Anmeldetag: 29.12.2010
(51) Int. Cl.: F16D 33/10, F16D 57/04

(54) **HYDRODYNAMISCHE MASCHINE UND VERFAHREN ZUR MINIMIERUNG DER SCHLEPPLEISTUNG EINER SOLCHEN**
HYDRODYNAMIC MACHINE AND METHOD FOR MINIMIZING THE TUGGING POWER THEREOF
MACHINE HYDRODYNAMIQUE ET PROCÉDÉ DE RÉDUCTION AU MINIMUM DE L'EFFET DE TRAÎNÉE DE CETTE DERNIÈRE

(30) Priorität: 15.01.2010 DE 102010004835
(43) Veröffentlichungstag der Anmeldung: 28.09.2011
(73) Patentinhaber: Voith Patent GmbH, 89522 Heidenheim (DE)
(72) Erfinder: LAUKEMANN, Dieter, 74564 Crailsheim (DE); OHR, Thomas, 74564 Crailsheim (DE); NEHER, Achim, 74564 Crailsheim (DE)
(86) Internationale Anmeldenummer: PCT/EP2010/007967
(87) Internationale Veröffentlichungsnummer: WO 2011/085801

(56) Entgegenhaltungen:
- DE-A1-102007 029 018
- US-A- 2 170 128
- US-A- 3 051 273

## Beschreibung

Die vorliegende Erfindung betrifft eine hydrodynamische Maschine, insbesondere einen hydrodynamischen Retarder, welche/welcher in einen externen Arbeitsmediumkreislauf eingebunden ist, sowie ein Verfahren zur Minimierung der Schleppleistung einer solchen hydrodynamischen Maschine.

Hydrodynamische Maschinen mit einem externen Arbeitsmediumkreislauf unterscheiden sich von hydrodynamischen Maschinen ohne externen Kreislauf dadurch, dass das Arbeitsmedium nicht permanent innerhalb der hydrodynamischen Maschine verbleibt, beispielsweise entweder in dem Arbeitsraum oder einem in der hydrodynamischen Maschine vorgesehenen Vorratsraum - auch Verzögerungskammer genannt -, sondern aus einem externen Arbeitsmediumkreislauf, in welchem in der Regel ein Kühler für das Arbeitsmedium angeordnet ist, in die hydrodynamische Maschine beziehungsweise deren Arbeitsraum geleitet wird und anschließend wieder aus dem Arbeitsraum beziehungsweise der hydrodynamischen Maschine in den externen Arbeitsmediumkreislauf abgeführt wird. Dementsprechend weist die hydrodynamische Maschine wenigstens einen Arbeitsmediumeinlass und einen Arbeitsmediumauslass auf. Im Arbeitsmediumauslass oder in Strömungsrichtung dahinter ist beispielsweise ein Druckregelventil vorgesehen, mittels welchem der statische Druck im Arbeitsraum und damit der Füllungsgrad des Arbeitsraumes eingestellt wird.

Das Austragen von Arbeitsmedium aus dem Arbeitsraum und, beim Abschalten der hydrodynamischen Maschine, die Entleerung des Arbeitsraumes erfolgt über sogenannte Auslassbohrungen. Diese Auslassbohrungen sind über dem Umfang der hydrodynamischen Maschine verteilt (in Drehrichtung gesehen) in den Schaufeln beziehungsweise in den Zwischenräumen zwischen den Schaufeln, bei einem Retarder in der Regel des Stators, vorgesehen und münden einerseits im Arbeitsraum und andererseits in einem Ringkanal, der sich in Umfangsrichtung (Drehrichtung) der hydrodynamischen Maschine erstreckt. Der Ringkanal dient dem Sammeln des Arbeitsmediums, das heißt die Strömung von Arbeitsmedium aus den einzelnen Auslassbohrungen wird im Ringkanal zusammengeführt. Aus dem Ringkanal wird das Arbeitsmedium dann über den genannten Arbeitsmediumauslass, der mit Bezug auf die Strömungsrichtung in Reihe zu den Auslassbohrungen angeordnet ist, in den externen Arbeitsmediumkreislauf geleitet.

Ein Nachteil der bekannten Ausführungen besteht darin, dass sich die hydrodynamische Maschine, insbesondere wenn sie als Retarder ausgeführt ist und die Auslassbohrungen im Stator, die in einem nicht umlaufenden Schaufelrad, vorgesehen sind, nicht vollständig entleeren, da insbesondere in einem teilgefüllten Zustand des Arbeitsraumes, das heißt, wenn nicht mehr die maximal mögliche Arbeitsmediummenge im Arbeitsraum vorhanden ist, die Druckverluste in der Arbeitsmediumströmung durch die Auslassbohrungen dies verhindern. In einem solchen teilgefüllten Zustand des Arbeitsraumes ist der die Entleerung treibende Druck im Arbeitsraum nämlich geringer als im vollgefüllten Zustand.

Die DE 10 2007 029 018 beschreibt eine solche hydrodynamische Maschine mit einem Primärrad und einem Sekundärrad, die einen Arbeitsraum ausbilden, der über einen externen Arbeitsmediumkreislauf befüllbar ist, um die Leistungsübertragung der hydrodynamischen Maschine entsprechend einzustellen. Weiterhin ist ein Ringkanal vorgesehen, welcher über Auslassbohrungen im Primärrad und Sekundärrad arbeitsmediumleitend mit dem Arbeitsraum verbunden ist. Aufgrund der Entleerungsproblematik ist bereits zusätzlich zu den Auslassbohrungen ein Arbeitsmediumauslass vorgesehen, welcher im Arbeitsraum mündet und parallel zum Ringkanal angeordnet ist. Die Merkmale dieses Dokuments sind im Oberbegriff des Anspruchs 1 zusammengefasst.

Versuche haben nun ergeben, dass hydrodynamische Maschinen, wie sie das obige Dokument beschreibt, zwar die Schleppleistung (übertragene Leistung aufgrund einer Restarbeitsmediummenge im Arbeitsraum bei deaktivierter hydrodynamischer Maschine) reduzieren. Dennoch ist die Schleppleistung nicht bei jeder Drehzahl optimal, sodass bei bestimmten Drehzahlen die hydrodynamische Maschine unerwünschte Leistung überträgt, was zu einem unerwünschten Leistungsverlust im Antriebsstrang, in dem die hydrodynamische Maschine eingesetzt ist, führen kann.

Der vorliegenden Erfindung liegt die Aufgabe zugrunde, eine hydrodynamische Maschine anzugeben, bei welcher die weitgehende Entleerung des Arbeitsraumes gegenüber dem Stand der Technik verbessert wird, sowie ein Verfahren zum Minimieren der Schleppleistung bei allen Drehzahlen.

Die erfindungsgemäße Aufgabe wird durch eine hydrodynamische Maschine und ein Verfahren gemäß den unabhängigern Ansprüchen gelöst. Die abhängigen Ansprüche stellen vorteilhafte und besonders zweckmäßige Ausgestaltungen der Erfindung dar.

Im Einzelnen weist die erfindungsgemäße hydrodynamische Maschine, die insbesondere als Retarder, das heißt mit einem umlaufenden Schaufelrad und einem stationären Schaufelrad ausgeführt ist, und welche in einen externen Arbeitsmediumkreislauf eingebunden ist, beispielsweise den Motorkühlkreislauf eines Kraftfahrzeugs, ein beschaufeltes Primärrad und ein beschaufeltes Sekundärrad auf, welche miteinander einen torusförmigen Arbeitsraum ausbilden, der mit Arbeitsmedium aus dem externen Arbeitsmediumkreislauf befüllbar ist, wobei das Arbeitsmedium aus dem Arbeitsraum der hydrodynamischen Maschine wieder zurück in den externen Kreislauf geleitet wird.

In der hydrodynamischen Maschine ist außerhalb des Arbeitsraumes ein Ringkanal vorgesehen, der insbesondere in Axialrichtung gesehen unmittelbar hinter dem Arbeitsraum vorteilhaft auf demselben Durchmesser wie der Arbeitsraum angeordnet ist, und welcher über Auslassbohrungen in einem der beiden Schaufelräder, bei einem Retarder insbesondere im Stator, arbeitsmediumleitend mit dem Arbeitsraum verbunden ist, um das Arbeitsmedium, welches durch die Auslassbohrungen aus dem Arbeitsraum austritt, zu sammeln und anschließend durch einen Arbeitsmediumauslass in den externen Kreislauf zu leiten. Die Vielzahl von Auslassbohrungen sind hinsichtlich der Arbeitsmediumströmung und insbesondere auch geometrisch parallel zueinander angeordnet und beispielsweise an mehreren oder allen Schaufelzwischenräumen, in Umfangsrichtung gesehen, in einem beschaufelten Rad, insbesondere im Stator eines Retarders, angeordnet.

Vorteilhaft ist hinsichtlich der Arbeitsmediumströmung parallel zu den Auslassbohrungen wenigstens ein zusätzlicher Arbeitsmediumauslass vorgesehen, insbesondere ein einziger zusätzlicher Arbeitsmediumauslass, welcher ebenfalls im Arbeitsraum mündet, in der Regel unmittelbar, und welcher zugleich unmittelbar oder mittelbar im externen Arbeitsmediumkreislauf mündet. Aufgrund dessen, dass dieser zusätzliche Arbeitsmediumauslass den Ringkanal sozusagen umgeht beziehungsweise parallel zu diesem angeordnet ist, kann in diesem der Druckverlust in der Strömung, welcher beim Strömen des Arbeitsmediums durch die Auslassbohrungen und insbesondere beim Einströmen des Arbeitsmediums aus den Auslassbohrungen in den Ringkanal, welcher einen wesentlichen größeren Querschnitt aufweist als die einzelnen Auslassbohrungen, vermieden werden, so dass eine viel leichtere Entleerung des Arbeitsraumes und damit eine weitgehendere Entleerung unabhängig von einem niedrigen Arbeitsmediumdruck im Arbeitsraum erreicht werden kann.

Erfindungsgemäß ist insbesondere zusätzlich zu dem wenigstens einen Arbeitsmediumauslass wenigstens eine am oder außerhalb, vorteilhaft radial außerhalb des Arbeitsraumes angeordnete Abgriffsöffnung vorgesehen, die in strömungsleitender Verbindung mit dem Arbeitsraum der hydrodynamischen Maschine steht und wenigstens ein Füllkanal, der in einen Bereich relativ niedrigen Arbeitsmediumdruckes innerhalb der hydrodynamischen Maschine mündet und strömungsleitend mit dem Arbeitsraum verbunden ist. Dabei sind die wenigstens eine Abgriffsöffnung und der Füllkanal mittels einer Rückführleitung derart arbeitsmediumleitend miteinander verbunden, dass Arbeitsmedium aus der wenigstens einen Abgriffsöffnung in den Füllkanal und von dort wieder mittelbar oder unmittelbar in den Arbeitsraum strömt. Die Rückführleitung ist dabei zusätzlich zu dem üblichen externen Arbeitsmediumkreislauf vorgesehen und wird somit nicht durch die Verbindung zwischen dem Ringkanal und dem Arbeitsmediumeinlass durch den externen Arbeitsmediumkreislauf dargestellt. Die Rückführleitung ist vielmehr in der Regel deutlich kürzer als diese Verbindung.

Im Arbeitsraum oder auf der Schaufelradrückseite befindliches Arbeitmedium wird vorteilhaft über das sich drehende beschaufelte Primärrad (bei einer hydrodynamischen Kupplung auch Sekundärrad) radial nach außen geschleudert und trifft auf die wenigstens eine Abgriffsöffnung, die vorteilhaft dem drehenden Schaufelrad unmittelbar gegenübersteht. Durch die zentrifugale Beschleunigung tritt das Arbeitsmedium mit einem relativ hohen Staudruck durch die Abgriffsöffnung hindurch und strömt über die Rückführleitung in den Füllkanals. Dadurch, dass der Füllkanal in einer Stelle relativ niedrigen Arbeitsmediumdruckes in der hydrodynamischen Maschine mündet, beispielsweise im Bereich des hydrodynamischen Zentrums der Arbeitsmediumkreislaufströmung im Arbeitsraum, in einem Einströmkanal in der hydrodynamischen Maschine oder im Arbeitsmediumeinlass, ergibt sich eine Zirkulationsströmung vom Arbeitsraum über die Rückführleitung zum Füllkanal und von dort wieder zum Arbeitsraum. Mittels dieser Zirkulationsströmung wird somit ein Teil des Arbeitsmediums aus dem Arbeitsraum der hydrodynamischen Maschine (Kreislaufvolumen) abgezweigt und zunächst unter Umgehung des Arbeitsraumes diesem über den Füllkanal wieder zugeführt. Hierdurch sinkt das augenblickliche Arbeitsmediumvolumen in der hydrodynamischen Maschine, insbesondere wenn kein zusätzliches Arbeitsmedium über den externen Arbeitsmediumkreislauf zugeführt wird (deaktivierte hydrodynamische Maschine). Durch diese Abzweigung des Teilstromes gelangt somit vergleichsweise weniger Arbeitsmedium in den Arbeitsraum, sodass die Schleppleistung bei deaktivierter hydrodynamischer Maschine weiter verringert wird. Die Zirkulationsströmung kann sich gleichermaßen bei deaktivierter (Nichtbremsbetrieb bei einem Retarder) sowie aktivierter (Bremsbetrieb) hydrodynamischer Maschine einstellen, wird jedoch im deaktivierten Zustand bevorzugt. So kann die Zirkulationsströmung vorteilhaft im aktivierten Zustand unterbrochen werden, beispielsweise mittels eines Ventils.

Mit Vorteil sind in der Rückführleitung in Strömungsrichtung gesehen ein erstes Ventil oder eine Blende und ein Auffangbehälter sowie ein zweites Ventil hintereinander angeordnet.

Mit Vorteil ist/sind das erste und/oder zweite Ventil als Wegeventil, insbesondere 2/2-Wegeventil ausgeführt.

Mittels den beiden Ventilen oder dem einen Ventil und der Blende und dem Auffangbehälter kann die Minimierung der Schleppleistung bei deaktivierter hydrodynamischer Maschine noch weiter verbessert werden, ohne den Wirkungsgrad beziehungsweise die Leistungsübertragung im aktivierten Zustand zu beeinträchtigen. Insbesondere kann durch die Schaltstellung der Ventile das Befüllen und Entleeren des Auffangbehälters optimal gesteuert werden.

Ein erfindungsgemäßes Verfahren zur Minimierung der Schleppleistung einer hydrodynamischen Maschine, welche gemäß der Erfindung ausgeführt ist, umfasst die folgenden Schritte:
- Füllen des Auffangbehälters mit Arbeitsmedium aus dem Arbeitsraum über den zusätzlichen Arbeitsmediumauslass durch Schließen des zweiten Ventils oder Geschlossenhalten des zweiten Ventils und, sofern vorgesehen, durch Öffnen des ersten Ventils oder Geöffnethalten des ersten Ventils beim Deaktivieren der hydrodynamischen Maschine;
- Entleeren des Auffangbehälters über den Füllkanal durch Öffnen des zweiten Ventils und, sofern vorhanden, durch Schließen des ersten Ventils beim Aktivieren der hydrodynamischen Maschine oder bei aktivierter hydrodynamischer Maschine.

Ist die hydrodynamische Maschine als Retarder ausgeführt, so wird im Bremsbetrieb, das heißt bei aktiviertem Retarder (sich drehendem Primärrad und über den externen Arbeitsmediumkreislauf wenigstens teilweise befüllten Arbeitsraum), das erste Ventil geschlossen, während das zweite Ventil geöffnet wird, sodass im Auffangbehälter gespeichertes Arbeitsmedium über das zweite Ventil in den Füllkanal und von dort in den Arbeitsraum strömen kann. Der Auffangbehälter wird dabei durch den Unterdruck im Bereich des Füllkanals entleert. Ist der Arbeitsmediumdruck im Bereich der Mündung des Füllkanals so gering, dass er unter den Dampfdruck des Arbeitsmediums fällt, so verdampft das Arbeitsmedium im Auffangbehälter. Das Schließen des ersten und Öffnen des zweiten Ventils wird dabei vorteilhaft während des Bremsens mit dem Retarder sowie auch eine kurze Zeitdauer danach eingestellt. Wird nun der Bremsvorgang beendet, somit der Zustrom an Arbeitsmedium aus dem Arbeitsmediumkreislauf in den Arbeitsraum unterbunden, so wird das zweite Ventil geschlossen und das erste Ventil geöffnet. Das im Arbeitsraum befindliche Arbeitsmedium wird vorteilhaft aufgrund der Drehbewegung des Primärrades nach außen beschleunigt, trifft auf die Abgriffsöffnung und strömt durch das geöffnete erste Ventil in den Auffangbehälter, in welchem durch die zuvor erfolgte Entleerung ein verhältnismäßig geringer Druck herrscht. Ein Abströmen aus dem Auffangbehälter wird hierbei durch das geschlossene zweite Ventil verhindert. Parallel dazu wird zum Entleeren des Arbeitsraumes, wie vorgehend beschrieben, das Arbeitsmedium über die Auslassbohrungen, den Ringkanal beziehungsweise den Arbeitsmediumauslass und somit über den externen Arbeitsmediumkreislauf aus dem Arbeitsraum ausgetragen. Dieser Austrag findet hinsichtlich der Arbeitsmediumströmung parallel zum Austrag über die wenigstens eine Abgriffsöffnung statt. In anderen Worten sind die Arbeitsmediumströmungen über den externen Arbeitsmediumkreislauf zum Zwecke der Entleerung des Arbeitsraumes und jene über die Abgriffsöffnung voneinander unabhängig.

Der Auffangbehälter ist so bemessen, dass eine optimale Arbeitsmediummenge im Inneren des hydrodynamischen Retarders verbleibt.

Vorteilhaft kann hierzu der Auffangbehälter so ausgeführt sein, dass sein Volumen geringer ist als das Gesamtvolumen an Arbeitsmedium in der hydrodynamischen Maschine beziehungsweise im hydrodynamischen Retarder bei vollgefülltem Arbeitsraum (Kreislaufvolumen). Insbesondere kann das Auffangbehältervolumen zwischen dem 0,2 bis 0,6-fachen des Kreislaufvolumens entsprechen.

Wie beschrieben, kann anstelle des ersten Ventils eine Blende, insbesondere feste Blende, zum Einsatz kommen, deren Öffnungsquerschnitt so bemessen ist, dass sich ein kleinerer Arbeitsmediumvolumenstrom durch die Blende ergibt, als durch das geöffnete zweite Ventil. In diesem Fall ist der Abstrom an Arbeitsmedium aus dem Auffangbehälter größer als der Zustrom, folglich entleert sich der Auffangbehälter bei aktivierter hydrodynamischer Maschine, wenn ein vergleichsweise großer Arbeitsmediumstrom über das zweite Ventil gezogen wird, wenn auch nicht zwingend vollständig. Hierdurch kann auf das erste Ventil und somit auf dessen Steuerung verzichtet werden.

Die Erfindung soll nun nachfolgend anhand von Ausführungsbeispielen und den Figuren exemplarisch erläutert werden.

Es zeigen:
- Figur 1: eine schematische Darstellung eines Teiles der erfindungsgemäßen hydrodynamischen Maschine;
- Figur 2: einen Axialschnitt durch eine vorteilhafte Ausführung der Erfindung in Form eines hydrodynamischen Retarders;
- Figur 3: eine Detailansicht auf die hydrodynamische Maschine in einem Axialschnitt senkrecht zur Drehachse der hydrodynamischen Maschine;
- Figur 4: eine weiter Ausführungsform der in Figur 3 dargestellten erfindungsgemäßen hydrodynamischen Maschine.

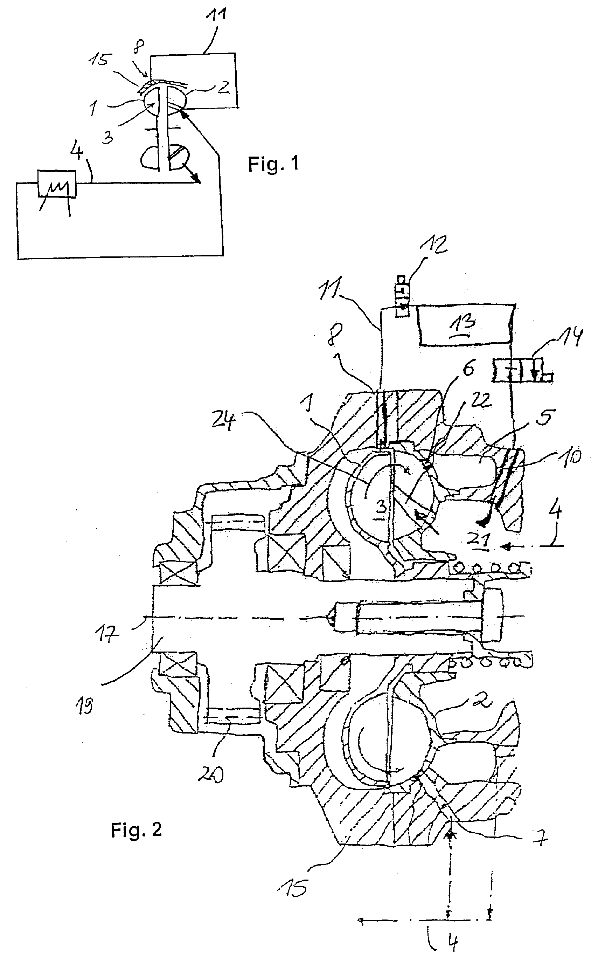

Figur 1 zeigt eine Darstellung der erfindungsgemäßen Rückführleitung einer hydrodynamischen Maschine. Letztere umfasst ein Primärrad 1 sowie ein Sekundärrad 2. Sekundärrad 2 und Primärrad 1, welche jeweils mit einer Beschaufelung versehen sind (hier nicht gezeigt) und sich in Axialrichtung der hydrodynamischen Maschine gegenüberstehen, bilden gemeinsam einen torusförmigen Arbeitsraum 3 aus, in welchem sich im befüllten oder teilbefüllten Zustand eine Kreislaufströmung 24 (Figur 2) ausbilden kann, sodass Drehmoment vom umlaufenden Primärrad 1 - bei Ausbildung als hydrodynamische Kupplung - auf das Sekundärrad 2 übertragen wird, wodurch das Sekundärrad 2 in Bewegung versetzt wird. Bei Ausführung als hydrodynamischer Retarder ist das Sekundärrad 2 als Stator ausgeführt, somit drehfest, sodass Drehmoment vom umlaufenden Primärrad 1 auf das stillstehende Sekundärrad 2 übertragen wird und dadurch ein Bremsmoment auf das Primärrad 1 ausgeübt wird.

Das Primärrad 1 und das Sekundärrad 2 sind hier von einem Gehäuse 15 (teilweise dargestellt) umschlossen, welches eine Abgriffsöffnung 8 aufweist. Letztere ist über eine Rückführleitung 11 wiederum mit dem Arbeitsraum 3 strömungsleitend verbunden. Bevorzugt ist eine, insbesondere eine einzige Abgriffsöffnung 8 sowie Rückführleitung 11 vorgesehen. Jedoch ist auch eine Vielzahl von Abgriffsöffnungen 8 denkbar, die insbesondere in dieselbe Rückführleitung 11 münden.

Die Rückführleitung 11 ist zusätzlich zu dem externen Arbeitmediumkreislauf 4, in welchem ein Wärmetauscher zum Abführen von Wärme aus dem Arbeitsmedium vorgesehen ist, vorgesehen, sodass sich demnach eine Kreislaufströmung von Arbeitsmedium aus dem Arbeitsraum 3 durch die Rückführleitung 11 erneut in den Arbeitsraum 3 außerhalb des externen Arbeitsmediumkreislaufes 4 einstellen kann. Man könnte auch von einem zweiten, insbesondere kleineren Arbeitsmediumkreislauf sprechen, wobei die Zirkulation in dem zweiten Kreislauf mit der Rückführleitung 11 insbesondere auch dann stattfinden kann, wenn die Zirkulation des Arbeitsmediums aus dem Arbeitsraum 3 und wieder zurück in den Arbeitsraum 3 über den externen Arbeitsmediumkreislauf 4 unterbrochen ist.

In der Figur 2 erkennt man die hydrodynamische Maschine aus Figur 1 im Detail, hier als Retarder ausgeführt. Dabei sind die gleichen Elemente mit denselben Bezugszeichen versehen. Es ist eine Eingangswelle 19 vorgesehen, welche das Primärrad 1 antreibt und auf welcher ein Ritzel 20 montiert oder einstückig mit der Eingangswelle 19 ausgeführt ist.

Im Betrieb der hydrodynamischen Maschine, das heißt vorliegend im Bremsbetrieb des Retarders, findet ein ständiger Arbeitsmediumaustausch zwischen dem Arbeitsraum 3 und einem externen Arbeitsmediumkreislauf 4 statt. Der externe Arbeitsmediumkreislauf 4 ist hier nur schematisch dargestellt, und zwar nur jener Teil, der sich in Strömungsrichtung gesehen unmittelbar hinter der hydrodynamischen Maschine anschließt, sowie jener Teil, der sich in Strömungsrichtung gesehen unmittelbar vor der hydrodynamischen Maschine anschließt. In dem externen Arbeitsmediumkreislauf 4, der beispielsweise Teil eines Fahrzeugmotorkühlkreislaufs sein kann, ist in der Regel ein Kühler (nicht gezeigt) zum Kühlen des im Arbeitsraum 3 erwärmten Arbeitsmediums vorgesehen. Das Arbeitsmedium kann demnach Wasser beziehungsweise ein Wassergemisch oder bei einer anderen Ausführungsform auch Öl sein.

Das Arbeitsmedium gelangt während des Betriebszustands der hydrodynamischen Maschine und beim Übergang vom Betriebszustand (aktivierte hydrodynamische Maschine) in den Nicht-Betriebszustand (deaktivert) aus dem Arbeitsraum 3 über eine Vielzahl von Auslassbohrungen 6 im Sekundärrad 2, in einen sich in der Kreisringform über dem Umfang der hydrodynamischen Maschine erstreckenden Ringkanal 5 und von dort in den externen Arbeitsmediumkreislauf 4. Hierbei tritt ein gewisser Druckverlust in der Arbeitsmediumströmung insbesondere beim Austritt des Arbeitsmediums aus den Auslassbohrungen 6 in den Ringkanal auf, da hier eine sprunghafte Erweiterung des Strömungsquerschnitts vorliegt. Dieser Druckverlust führt dazu, dass insbesondere bei vergleichsweise geringen Drücken im Arbeitsraum 3 eine vollständige Entleerung des Arbeitsraumes 3 im Nicht-Betriebszustand (Nicht-Bremsbetrieb) beziehungsweise bei Übergang vom Betriebszustand (Bremsbetrieb) in den Nicht-Betriebszustand (Nicht-Bremsbetrieb) verhindert wird.

Das im Arbeitsraum 3 unerwünscht verbleibende Arbeitsmedium führt dazu, dass auch im Nicht-Betriebszustand ein Restdrehmoment vom Primärrad 1 auf das Sekundärrad 2 übertragen wird, was zu einem unerwünschten Leistungsverlust im Antriebsstrang, beispielsweise Kraftfahrzeugantriebsstrang, in welchen die hydrodynamische Maschine eingebunden ist, führt.

Um eine bessere Entleerung des Arbeitsraumes 3 zu ermöglichen, ist ferner in Strömungsrichtung parallel zu den Auslassbohrungen 6 beziehungsweise dem Ringkanal 5 ein zusätzlicher Arbeitsmediumauslass 7 vorgesehen, über welchen Arbeitsmedium aus dem Arbeitsraum 3 in den externen Kreislauf 4 geleitet wird. Der Arbeitsmediumauslass 7 ist hier im Gehäuse 15, welches vorliegend drehfest mit dem Sekundärrad ausgeführt ist, eingebracht. Der zusätzliche Arbeitsmediumauslass 7 kann dabei unmittelbar mit dem externen Arbeitsmediumkreislauf 4 verbunden sein beziehungsweise unmittelbar in diesem münden.

Das Gehäuse 15 umschließt neben dem Sekundärrad 2 auch das Primärrad 1 und damit den Arbeitsraum 3, in dem sich die Kreislaufströmung 24 ausbilden kann. Vorliegend ist im Bereich des Primärrades 1 die Abgriffsöffnung 8, wie sie in Figur 1 gezeigt ist, in das Gehäuse 15 eingebracht. Hier verläuft diese im Wesentlichen in Radialrichtung der hydrodynamischen Maschine. Dies könnte jedoch auch anders sein. Dabei kann eine Vielzahl von Abgriffsöffnungen 8, insbesondere in Drehrichtung des Primärrads 1 gesehen, in das Gehäuse 15 eingebracht sein. Die wenigstens eine Abgriffsöffnung 8 ist mit der Rückführleitung 11 und einem Füllkanal 10 arbeitsmediumleitend verbunden. Im vorliegenden Fall sind in der Rückführleitung 11 in Strömungsrichtung des Arbeitsmediums gesehen ein erstes Ventil 12, ein Auffangbehälter 13 sowie ein zweites Ventil 14 hintereinander angeordnet. Vorliegend ist der Füllkanal 10 ebenfalls im Gehäuse 15 eingebracht oder wird von diesem ausgebildet und mündet unmittelbar in einem Füllraum 21, welcher einen niedrigeren Arbeitsmediumdruck aufweist, als der der in der Abgriffsöffnung 8 vorherrscht. Der Füllraum 21 ist über einen Arbeitsmediumzulauf 22, beispielsweise in Form einer Vielzahl von im Sekundärrad 2 eingebrachter Bohrungen, arbeitsmediumleitend mit dem Arbeitsraum 3 verbunden. Hierdurch kann Arbeitsmedium aus dem externen Arbeitsmediumkreislauf 4 sowie aus der Rückführleitung 11 wenigstens mittelbar dem Arbeitsraum 3 zugeführt werden.

Im Betriebszustand (Bremsbetrieb) ist das erste Ventil 12 geschlossen, während das zweite Ventil 14 geöffnet ist, sodass kein Arbeitsmedium über die Rückführleitung 11 in den Auffangbehälter 13 strömt, jedoch Arbeitsmedium infolge des vergleichsweise niedrigeren Arbeitsmediumdruckes im Füllraum 21 aus dem Auffangbehälter 13 in den Füllraum 21 strömt. Der Auffangbehälter 13 kann sich hierbei entleeren. Dabei kann jedoch eine Restmenge an Arbeitsmedium im Auffangbehälter 13 verbleiben. Beim Übergang vom Betriebszustand in den Nicht-Betriebszustand wird hingegen das erste Ventil 12 geöffnet und das zweite Ventil 14 geschlossen. Hierbei strömt vom Primärrad 1 nach außen beschleunigtes Arbeitsmedium in den Rückführkanal 11 und durch das geöffnete Ventil 12 in den Auffangbehälter 13, indem aufgrund der vorherigen Entleerung ein vergleichsweise niedriger Druck herrscht.

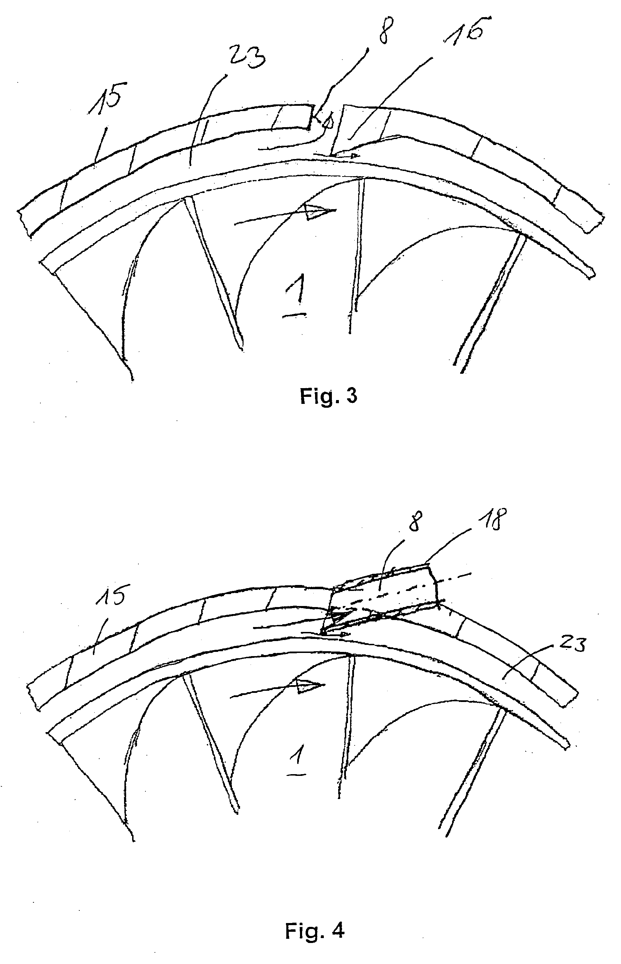

Die Figuren 3 und 4 zeigen zwei weitere Ausführungsformen der Abgriffsöffnung 8 einer erfindungsgemäßen hydrodynamischen Maschine, dargestellt in einem Axialschnitt senkrecht zur Drehachse 17 (Figur 2) der hydrodynamischen Maschine. Auch hier sind die gleichen Elemente mit denselben Bezugszeichen bezeichnet.

In Figur 3 ist dabei vorliegend das Primärrad 1 sowie ein Teil des Gehäuses 15 dargestellt. Beide begrenzen hierbei einen Spalt 23, durch welchen Arbeitsmedium aus dem Arbeitsraum 3 in die dargestellte Druckabgriffsöffnung 8 strömen kann. In Strömungsrichtung oder Drehrichtung des Primärrades 1 gesehen hinter der Abgriffsöffnung 8 ist das Gehäuse 15 derart ausgeführt, dass es auf dessen dem Primärrad 1 zugewandten Oberfläche einen Vorsprung 16 ausbildet. Der Vorsprung 16 verläuft dabei radial in Richtung auf das Primärrad 1 hin. Dadurch entsteht im radial innersten Bereich des Vorsprungs 16 ein minimaler Spalt, welcher wenig Arbeitsmedium hindurchlässt und somit der Großteil des Arbeitsmediums an der der Abgriffsöffnung 8 zugewandten Stirnseite in die Abgriffsöffnung 8 umgelenkt wird.

In Figur 4 ist anstelle des Vorsprungs 16 eine weitere Ausführungsform der Abgriffsöffnung 8 dargestellt. Letztere ist vorliegend als schräge Bohrung ausgeführt. Dies bedeutet, dass die Verlängerung der Längsachse der Bohrung in einem Axialschnitt senkrecht zur Drehachse der hydrodynamischen Maschine gesehen, das Gehäuse 15 nach Art einer Sekante schneidet. In die Abgriffsbohrung 8 ist dabei eine Hülse 18 eingebracht. Durch diese schräge Bohrung kann Arbeitsmedium optimal aus dem Spalt 23 in die Rückführleitung 11 abgeführt werden. Die Hülse 18 kann hierbei als Spannstift, insbesondere aus Stahl hergestellt sein.

### Bezugszeichenliste

- 1: Primärrad
- 2: Sekundärrad
- 3: Arbeitsraum
- 4: Arbeitsmediumkreislauf
- 5: Ringkanal
- 6: Auslassbohrungen
- 7: Arbeitsmediumauslass
- 8: Abgriffsöffnung
- 9: Nebenraum
- 10: Füllkanal
- 11: Rückführleitung
- 12: erstes Ventil
- 13: Auffangbehälter
- 14: zweites Ventil
- 15: Gehäuse
- 16: Vorsprung
- 17: Drehachse
- 18: Hülse
- 19: Eingangswelle
- 20: Ritzel
- 21: Füllraum
- 22: Arbeitsmediumzulauf
- 23: Spalt
- 24: Kreislaufströmung

## Patentansprüche

1. Hydrodynamische Maschine, insbesondere Retarder, mit einem externen Arbeitsmediumkreislauf (4), umfassend
1.1 ein beschaufeltes Primärrad (1) und ein beschaufeltes Sekundärrad (2), die miteinander einen torusförmigen Arbeitsraum (3) ausbilden, der mit Arbeitsmedium aus dem externen Arbeitsmediumkreislauf (4) befüllbar ist, welches wieder zurück in den externen Arbeitsmediumkreislauf (4) geleitet wird;
1.2 einen außerhalb des Arbeitsraums (3) angeordneten Ringkanal (5), der über Auslassbohrungen (6) im Primärrad (1) oder Sekundärrad (2) arbeitsmediumleitend mit dem Arbeitsraum (3) verbunden ist und in einer strömungsleitenden Verbindung mit dem externen Arbeitsmediumkreislauf (4) steht, um aus dem Arbeitsraum (3) durch die Auslassbohrungen (6) austretendes Arbeitsmedium zu sammeln und dem externen Arbeitsmediumkreislauf (4) zuzuleiten;
**gekennzeichnet durch** die folgenden Merkmale:
1.3 mit wenigstens einer am oder außerhalb des Arbeitsraumes (3) angeordneten Abgriffsöffnung (8), die in strömungsleitender Verbindung mit dem Arbeitsraum (3) der hydrodynamischen Maschine steht und wenigstens einem Füllkanal (10), der in einen Bereich relativ niedrigen Arbeitsmediumdruckes innerhalb der hydrodynamischen Maschine mündet und strömungsleitend mit dem Arbeitsraum (3) verbunden ist; wobei
1.4 die wenigstens eine Abgriffsöffnung (8) und der Füllkanal (10) mittels einer Rückführleitung (11) außerhalb des externen Arbeitsmediumkreislaufes (4) derart arbeitsmediumleitend miteinander verbunden sind, dass Arbeitsmedium aus der wenigstens einen Abgriffsöffnung (8) in den Füllkanal (10) und von dort wieder in den Arbeitsraum (3) strömt, sodass sich ein Arbeitsmediumkreislauf außerhalb des externen Arbeitsmediumkreislaufes (4) einstellt.

2. Hydrodynamische Maschine gemäß Anspruch 1, **dadurch gekennzeichnet, dass** in der Rückführleitung (11) in Strömungsrichtung des Arbeitsmediums gesehen ein erstes Ventil (12) oder eine Blende und ein Auffangbehälter (13) sowie ein zweites Ventil (14) hintereinander angeordnet sind.

3. Hydrodynamische Maschine gemäß Anspruch 2, **dadurch gekennzeichnet, dass** das erste Ventil (12) und zweite Ventil (14) als Wegeventil ausgeführt sind.

4. Hydrodynamische Maschine gemäß Anspruch 1 oder 2, **dadurch gekennzeichnet, dass** das Volumen des Auffangbehälters (13) kleiner ist als das Kreislaufvolumen der hydrodynamischen Maschine.

5. Hydrodynamische Maschine gemäß einem der Ansprüche 1 bis 4, **dadurch gekennzeichnet, dass** die hydrodynamische Maschine ein Gehäuse (15) umfasst, welches das Primärrad (1) und das Sekundärrad (2) umschließt und die wenigstens eine Abgriffsöffnung (8) im Gehäuse (15) eingebracht ist.

6. Hydrodynamische Maschine gemäß Anspruch 5, **dadurch gekennzeichnet, dass** das Gehäuse (15) auf seiner dem Primärrad (1) oder Sekundärrad (2) zugewandten Seite in Strömungsrichtung hinter der Abgriffsöffnung gesehen einen Vorsprung (16) in Radialrichtung aufweist.

7. Hydrodynamische Maschine gemäß einem der Ansprüche 1 bis 5, **dadurch gekennzeichnet, dass** die Abgriffsöffnung (8) als Bohrung ausgeführt ist.

8. Hydrodynamische Maschine gemäß Anspruch 7, **dadurch gekennzeichnet, dass** die Verlängerung der Längsachse der Abgriffsöffnung (8) in einem Axialschnitt senkrecht zur Drehachse (17) der hydrodynamischen Maschine nach Art einer Sekante durch das Gehäuse (15) verläuft.

9. Hydrodynamische Maschine gemäß Anspruch 7 oder 8, **dadurch gekennzeichnet, dass** in die Abgriffsöffnung (8) eine Hülse (18) eingesetzt ist.

10. Verfahren zur Minimierung der Schleppleistung einer hydrodynamischen Maschine, die gemäß einem der Ansprüche 2 bis 9 ausgeführt ist; **gekennzeichnet durch** die folgenden Schritte:
10.1 Füllen des Auffangbehälters (13) mit Arbeitsmedium aus dem Arbeitsraum (3) über den zusätzlichen Arbeitsmediumauslass (17) **durch** Schließen des zweiten Ventils (14) oder Geschlossenhalten des zweiten Ventils (14) und, sofern vorgesehen, **durch** Öffnen des ersten Ventils (12) oder Geöffnethalten des ersten Ventils (12) beim Deaktivieren der hydrodynamischen Maschine;
10.2 Entleeren des Auffangbehälters (13) über den Füllkanal (10) **durch** Öffnen des zweiten Ventils (14) und, sofern vorhanden, **durch** Schließen des ersten Ventils (12) beim Aktivieren der hydrodynamischen Maschine oder bei aktivierter hydrodynamischer Maschine.

## Claims

1. Hydrodynamic machine, in particular retarder, having an external working medium circuit (4), comprising
1.1 a vaned primary wheel (1) and a vaned secondary wheel (2), which form a toroidal working chamber (3) with each other, which can be filled with working medium from the external working medium circuit (4), which medium is led back again into the external working medium circuit (4),
1.2 an annular channel (5) arranged outside the working chamber (3), which is connected to the working chamber (3) so as to conduct working medium via outlet bores (6) in the primary wheel (1) or secondary wheel (2) and is connected to the external working medium circuit (4) so as to conduct flow, in order to collect working medium emerging from the working chamber (3) through the outlet bores (6) and to feed the same to the external working medium circuit (4);
**characterized by** the following features:
1.3 having at least one tapping opening (8), which is arranged on or outside the working chamber (3) and is connected to the working chamber (3) of the hydrodynamic machine so as to conduct flow, and at least one filling channel (10), which opens within the hydrodynamic machine in a region of relatively low working medium pressure and is connected to the working chamber (3) so as to conduct flow;
wherein
1.4 the at least one tapping opening (8) and the filling channel (10) are connected to each other so as to conduct working medium by means of a return line (11) outside the external working medium circuit (4), in such a way that working medium from the at least one tapping opening (8) flows into the filling channel (10) and from there into the working chamber (3) again, so that a working medium circuit is established outside the external working medium circuit (4).

2. Hydrodynamic machine according to Claim 1, **characterized in that**, as seen in the flow direction of the working medium, a first valve (12) or an orifice and a collecting container (13) and also a second valve (14) are arranged one after another in the return line (11).

3. Hydrodynamic machine according to Claim 2, **characterized in that** the first valve (12) and second valve (14) are formed as directional control valves.

4. Hydrodynamic machine according to Claim 1 or 2, **characterized in that** the volume of the collecting container (13) is smaller than the circuit volume of the hydrodynamic machine.

5. Hydrodynamic machine according to one of Claims 1 to 4, **characterized in that** the hydrodynamic machine comprises a housing (15) which encloses the primary wheel (1) and the secondary wheel (2), and the at least one tapping opening (8) is introduced into the housing (15).

6. Hydrodynamic machine according to Claim 5, **characterized in that**, as seen in the flow direction after the tapping opening, on its side facing the primary wheel (1) or secondary wheel (2), the housing (15) has a protrusion (16) in the radial direction.

7. Hydrodynamic machine according to one of Claims 1 to 5, **characterized in that** the tapping opening (8) is formed as a bore.

8. Hydrodynamic machine according to Claim 7, **characterized in that**, in an axial section at right angles to the axis of rotation (17) of the hydrodynamic machine, the extension of the longitudinal axis of the tapping opening (8) extends through the housing (15) in the manner of a secant.

9. Hydrodynamic machine according to Claim 7 or 8, **characterized in that** a sleeve (18) is inserted into the tapping opening (8).

10. Method for minimizing the pulling power of a hydrodynamic machine which is formed in accordance with one of Claims 2 to 9,
**characterized by** the following steps:
10.1 filling the collecting container (13) with working medium from the working chamber (3) via the additional working medium outlet (17) by closing the second valve (14) or keeping the second valve (14) closed and, if provided, by opening the first valve (12) or keeping the first valve (12) open during the deactivation of the hydrodynamic machine;
10.2 emptying the collecting container (13) via the filling channel (10) by opening the second valve (14) and, if present, by closing the first valve (12) during the activation of the hydrodynamic machine or with the hydrodynamic machine activated.

## Revendications

1. Machine hydrodynamique, en particulier ralentisseur, comprenant un circuit de fluide de travail externe (4), comprenant
1.1 une roue à aubes primaire (1) et une roue à aubes secondaire (2) qui constituent ensemble un espace de travail en forme de tore (3) qui peut être rempli avec le fluide de travail provenant du circuit de fluide de travail externe (4), et qui est à nouveau ramené dans le circuit de fluide de travail externe (4) ;
1.2 un canal annulaire (5) disposé à l'extérieur de l'espace de travail (3), lequel est connecté par le biais d'alésages de sortie (6) dans la roue primaire (1) ou la roue secondaire (2) à l'espace de travail (3) en conduisant le fluide de travail et est en liaison fluidique avec le circuit de fluide de travail externe (4) afin de recueillir le fluide de travail sortant de l'espace de travail (3) à travers les alésages de sortie (6) et de le conduire au circuit de fluide de travail externe (4) ;
**caractérisée par** les caractéristiques suivantes :
1.3 avec au moins une ouverture de prélèvement (8) disposée sur ou à l'extérieur de l'espace de travail (3), laquelle est en liaison fluidique avec l'espace de travail (3) de la machine hydrodynamique et avec au moins un canal de remplissage (10) qui débouche dans une région de relativement faible pression de fluide de travail à l'intérieur de la machine hydrodynamique et est connecté fluidiquement à l'espace de travail (3) ;
1.4 l'au moins une ouverture de prélèvement (8) et le canal de remplissage (10) étant connectés l'un à l'autre au moyen d'une conduite de retour (11) à l'extérieur du circuit de fluide de travail externe (4) en conduisant le fluide de travail de telle sorte que le fluide de travail provenant de l'au moins une ouverture de prélèvement (8) s'écoule dans le canal de remplissage (10) et de là à nouveau dans l'espace de travail (3) de telle sorte qu'il s'établisse un circuit de fluide de travail à l'extérieur du circuit de fluide de travail externe (4).

2. Machine hydrodynamique selon la revendication 1, **caractérisée en ce qu'**une première soupape (12) ou un diaphragme et un récipient de collecte (13) ainsi qu'une deuxième soupape (14) sont disposés les uns derrière les autres dans la conduite de retour (11), vu dans la direction d'écoulement du fluide de travail.

3. Machine hydrodynamique selon la revendication 2, **caractérisée en ce que** la première soupape (12) et la deuxième soupape (14) sont réalisées sous forme de soupapes à tiroir.

4. Machine hydrodynamique selon la revendication 1 ou 2, **caractérisée en ce que** le volume du récipient de collecte (13) est inférieur au volume de circuit de la machine hydrodynamique.

5. Machine hydrodynamique selon l'une quelconque des revendications 1 à 4, **caractérisée en ce que** la machine hydrodynamique comprend un boîtier (15) qui entoure la roue primaire (1) et la roue secondaire (2) et l'au moins une ouverture de prélèvement (8) est pratiquée dans le boîtier (15).

6. Machine hydrodynamique selon la revendication 5, **caractérisée en ce que** le boîtier (15) présente, sur son côté tourné vers la roue primaire (1) ou la roue secondaire (2), vu dans la direction d'écoulement derrière l'ouverture de prélèvement, une saillie (16) dans la direction radiale.

7. Machine hydrodynamique selon l'une quelconque des revendications 1 à 5, **caractérisée en ce que** l'ouverture de prélèvement (8) est réalisée sous forme d'alésage.

8. Machine hydrodynamique selon la revendication 7, **caractérisée en ce que** le prolongement de l'axe longitudinal de l'ouverture de prélèvement (8), en coupe axiale perpendiculairement à l'axe de rotation (17) de la machine hydrodynamique, s'étend à la manière d'une sécante à travers le boîtier (15).

9. Machine hydrodynamique selon la revendication 7 ou 8, **caractérisée en ce qu'**une douille (18) est insérée dans l'ouverture de prélèvement (8).

10. Procédé pour minimiser l'effet de traînée d'une machine hydrodynamique réalisée selon l'une quelconque des revendications 2 à 9, **caractérisé par** les étapes suivantes :
10.1 remplissage du récipient de collecte (13) avec du fluide de travail provenant de l'espace de travail (3) par le biais de la sortie de fluide de travail supplémentaire (17) par fermeture de la deuxième soupape (14) ou maintien fermé de la deuxième soupape (14) et, lorsqu'elle est prévue, par ouverture de la première soupape (12) ou maintien ouvert de la première soupape (12) lors de la désactivation de la machine hydrodynamique ;
10.2 vidange du récipient de collecte (13) par le biais du canal de remplissage (10) en ouvrant la deuxième soupape (14), et, lorsqu'elle est prévue, par fermeture de la première soupape (12) lors de l'activation de la machine hydrodynamique ou lorsque la machine hydrodynamique est activée.
